# EUROPEAN PATENT APPLICATION

(11) **EP 2 407 518 A1**
(43) Date of publication of application: **18.01.2012**
(21) Application number: 11173704.5
(22) Date of filing: 12.07.2011
(51) Int. Cl.: C09D 11/00

(54) **Aqueous inkjet ink**

(30) Priority: 15.07.2010 US 364549 P
(71) Applicant: Kabushiki Kaisha Toshiba, Tokyo 105-8001 (JP); Toshiba TEC Kabushiki Kaisha, Tokyo 141-8664 (JP)
(72) Inventor: Akiyama, Ryozo, Shinagawa-ku, Tokyo 141-8664 (JP); Kubota, Atsushi, Shinagawa-ku, Tokyo 141-8664 (JP); Yoshida, Maiko, Shinagawa-ku, Tokyo 141-8664 (JP); Hara, Takafumi, Shinagawa-ku, Tokyo 141-8664 (JP); Tonohiro, Chie, Shinagawa-ku, Tokyo 141-8664 (JP)
(74) Representative: Gendron, Vincent Christian

(57) **Abstract**

According to one embodiment, an aqueous inkjet ink includes a pigment in an amount of 2 to 20% by mass of the total amount of the aqueous inkjet ink, and a dispersion medium in which the pigment is dispersed. The dispersion medium contains water in the amount of 53 to 94% by mass, with the remainder of the dispersion medium being a compound represented by the following general formula 1. The water accounts for 50 to 80% by mass of the total amount of the aqueous inkjet ink.

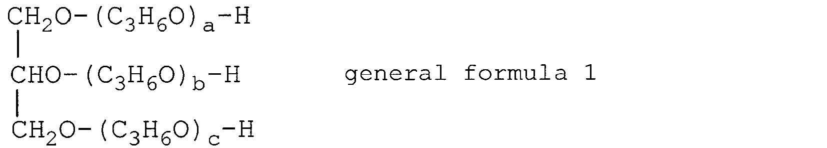

In the general formula 1, a, b, and c may be the same or different, each representing an integer of 1 or more, and satisfy the following inezuation: 4 ≤ a+b+c ≤ 10.

## Description

### FIELD

Embodiments described herein relate generally to an aqueous inkjet ink.

### BACKGROUND

Recently, an inkjet ink in which a pigment is dispersed in an aqueous medium is proposed. An ink using a pigment is excellent in water resistance and light resistance as compared with an ink using a water-soluble dye.

The inkjet ink should have a property suitable for ejection from an inkjet head. The inkjet ink for use in printing on a paper medium is required to reduce the degree of deformation of the paper medium to as low as possible and to enable the formation of a high quality image on the paper medium.

### BRIEF DESCRIPTION OF THE DRAWINGS

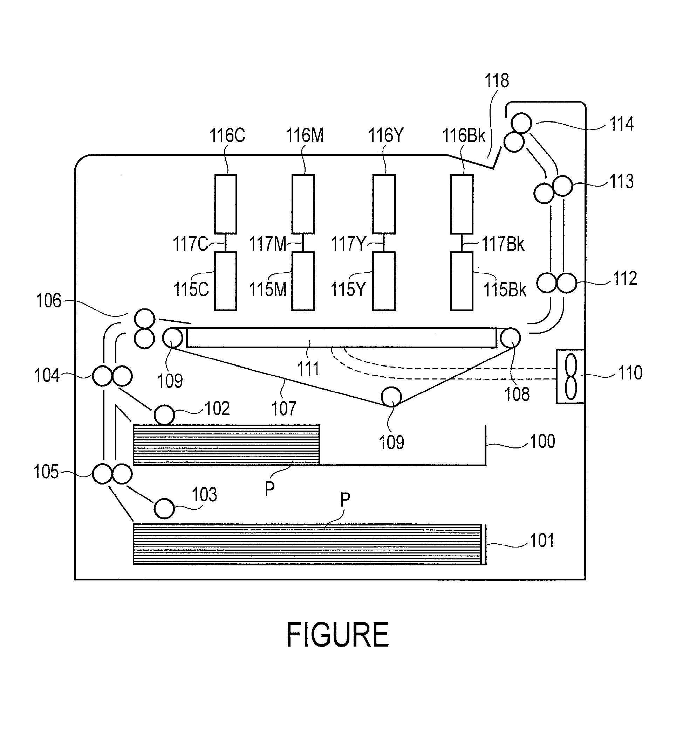

The single figure shows an example of an inkjet printing apparatus to which an embodiment is applied.

### DETAILED DESCRIPTION

According to one embodiment, an aqueous inkjet ink includes a pigment in an amount of 2 to 20% by mass of the total amount of the aqueous inkjet ink, and a dispersion medium in which the pigment is dispersed. The dispersion medium contains water in an amount of 53 to 94% by mass, with the remainder of the dispersion medium being a compound represented by the following general formula 1. The water accounts for 50 to 80% by mass of the total amount of the aqueous inkjet ink.

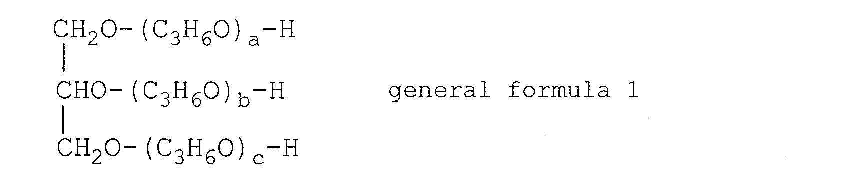

In the general formula 1, a, b, and c may be the same or different, each representing an integer of 1 or more, and satisfy the following inequation: 4 ≤ a+b+c ≤ 10.

Hereinafter, embodiments will be specifically described.

In an inkjet printing apparatus shown in the figure, paper cassettes 100 and 101 contain paper P of different sizes, respectively. A paper feed roller 102 or 103 takes out the paper P in response to the selected paper size from the paper cassette 100 or 101 and conveys the paper P to conveying roller pairs 104 and 105 and a resist roller pair 106.

A tension is given to a conveying belt 107 by a driving roller 108 and two driven rollers 109. Through-holes are provided at predetermined intervals in the conveying belt 107, and for the purpose of adsorbing the paper P onto the conveying belt 107, a negative pressure chamber 111 connected to a fan 110 is installed in the inside of the conveying belt 107. Conveying roller pairs 112, 113, and 114 are installed downstream in the paper conveying direction of the conveying belt 107.

Four rows of inkjet heads which eject inks on paper according to image data are disposed above the conveying belt 107. An inkjet head 115C which ejects a cyan (C) ink, an inkjet head 115M which ejects a magenta (M) ink, an inkjet head 115Y which ejects a yellow (Y) ink, and an inkjet head 115Bk which ejects a black (Bk) ink are arranged in this order from the upstream. Further, these inkjet heads 115C, 115M, 115Y, and 115Bk are provided with a cyan (C) ink cartridge 116C, a magenta (M) ink cartridge 116M, a yellow (Y) ink cartridge 116Y, and a black (Bk) ink cartridge 116Bk, respectively, each of which contains an ink of each color. These cartridges are connected to the inkjet heads via tubes 117C, 117M, 117Y, and 117Bk, respectively.

An image forming operation of the inkjet printing apparatus having such a structure will be described below.

First, image processing for printing by an image processing unit (not shown) is initiated, and image data for printing are transferred to the respective inkjet heads 115C, 115M, 115Y, and 115Bk. Also, the paper P of a selected paper size is taken out one by one from the paper cassette 100 or 101 by the paper feed roller 102 or 103 and conveyed to the conveying roller pairs 104 and 105 and the resist roller pair 106. The resist roller pair 106 corrects a skew of the paper P and conveys the paper P at a given timing.

The negative pressure chamber 111 draws air through the through-holes of the conveying belt 107, and therefore, the paper P is conveyed in a state of being adsorbed onto the conveying belt 107 on a lower side of the inkjet heads 115C, 115M, 115Y, and 115Bk. In this manner, the respective inkjet heads 115C, 115M, 115Y, and 115Bk and the paper P can keep a fixed space from each other. The ink of each color is ejected from each of the inkjet heads 115C, 115M, 115Y, and 115Bk in synchronization with the timing for conveying the paper P from the resist roller pair 106. Thus, a color image is formed at a desired position on the paper P. The paper P having an image formed thereon is discharged to a paper discharge tray 118 by the conveying roller pairs 112, 113, and 114.

Each ink cartridge stores an aqueous inkjet ink according to one embodiment.

In the aqueous inkjet ink according to this embodiment, a pigment is dispersed in a given dispersion medium. The dispersion medium contains water in an amount of 53 to 94% by mass, with the remainder being a polyoxypropylene glyceryl ether represented by the following general formula 1.

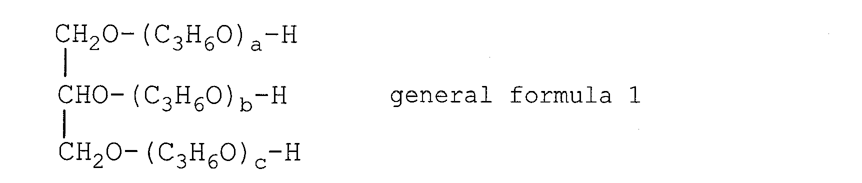

In the general formula 1, a, b, and c may be the same or different, each representing an integer of 1 or more and satisfy the following inequation: 4 ≤ a+b+c ≤ 10.

The dispersion medium of the aqueous inkjet ink according to this embodiment is composed of water and a given polyoxypropylene glyceryl ether blended in predetermined amounts. As described above, 3 to 94% by mass of the dispersion medium is water, with the remainder of the dispersion medium being a given polyoxypropylene glyceryl ether. Further, water accounts for 50 to 80% by mass of the total amount of the aqueous inkjet ink. Since such a dispersion medium is used, the aqueous inkjet ink according to this embodiment can suppress the deformation of a paper medium as much as possible and can form a high quality image on the paper medium.

The paper medium as used herein generally refers to a medium made of paper to be used for printing. The paper medium is broadly divided into coated paper coated with a material for increasing print properties such as art paper or coat paper and non-coated paper to be used for utilizing the properties of paper itself. The paper medium is applied to a variety of uses such as books, documents, newspapers, packages, printer sheets, etc. The paper medium also includes corrugated cardboard, containers made of paper, and thick paper such as cardboard. For example, so-called plain paper such as copy paper to be used in a copier or a printer for office or home use is a typical paper medium.

According to one embodiment, a pigment is dispersed in the dispersion medium containing water and a given polyoxypropylene glyceryl ether in predetermined amounts, respectively.

The pigment is not particularly limited, and either of an inorganic pigment and an organic pigment may be used. Examples of the inorganic pigment include titanium oxide and iron oxide. Further, a carbon black produced by a known method such as a contact method, a furnace method, or a thermal method can be used.

As the organic pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate or an acid dye type chelate), a nitro pigment, a nitroso pigment, aniline black, or the like can be used.

Specific examples of the carbon black which is used as a black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa Co., Ltd.).

Specific examples of the pigment which is used in a yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in a magenta ink include C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in a cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

Since the ink is an inkjet ink, it is preferred that the average particle diameter of the pigment is within a range of about 10 to 300 nm. It is more preferred that the average particle diameter of the pigment is within a range of about 10 to 200 nm.

The average particle diameter of the pigment can be determined using a particle size distribution analyzer employing a dynamic light scattering method. Examples of the particle size distribution analyzer include HPPS (Malvern Instruments Ltd.).

The pigment can be used in a state of a pigment dispersion. The pigment dispersion can be prepared by, for example, dispersing the pigment in water or an alcohol using a dispersant. Examples of the dispersant include a surfactant, a water-soluble resin, and a water-insoluble resin. Alternatively, a self-dispersible pigment may be used. The self-dispersible pigment is a pigment which can be dispersed in water or the like without using a dispersant, and to which at least one functional group selected from a carbonyl group, a carboxyl group, a hydroxyl group, and a sulfone group or a salt thereof is bound through a surface treatment. Examples of the surface treatment include a vacuum plasma treatment, a diazo coupling treatment, and an oxidation treatment. The self-dispersible pigment is obtained by grafting a functional group or a molecule containing a functional group on the surface of a pigment through such a surface treatment.

The content of the pigment in the ink is preferably within a range of 2 to 20% by mass of the total amount of the ink. If the content of the pigment is within this range, a printed matter having a necessary image density can be formed without causing any disadvantage with respect to the storage stability or ejection performance of the ink. The ink containing the pigment in an amount of 3 to 10% by mass of the total amount of the ink has a viscosity suitable for ejection from the inkjet head over a wide temperature range of about 20 to 50°C. Moreover, the quality of an image formed using this ink is favorable.

The pigment dispersion is mixed with the dispersion medium containing water and a given polyoxypropylene glyceryl ether at a predetermined ratio, whereby the aqueous inkjet ink according to this embodiment is obtained.

As described above, according to one embodiment, 53 to 94% by mass of the total amount of the dispersion medium is water. If the content of water in the dispersion medium is too low, a viscosity within a range suitable as an inkjet ink cannot be obtained, and therefore, the ejection performance from the inkjet head is lowered. Moreover, the dispersion stability of the pigment is lowered, and therefore, the clogging of the inkjet head is liable to occur. On the other hand, if the content of water in the dispersion medium is too high, it is difficult to suppress the deformation of paper. The amount of water is preferably from 53 to 84% by mass of the total amount of the dispersion medium.

The remainder of the dispersion medium is a polyoxypropylene glyceryl ether represented by the following general formula 1.

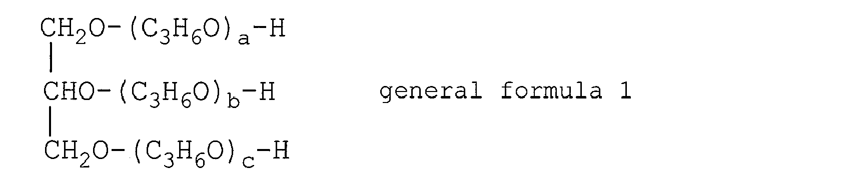

In the general formula 1, a, b, and c may be the same or different, each representing an integer of 1 or more and satisfy the following inequation: 4 ≤ a+b+c ≤ 10.

In order to maintain a suppressive effect on the deformation of paper, the value of (a+b+c) in the general formula 1 is set to 4 or more. If the value of (a+b+c) is too large, a viscosity within a range suitable as an inkjet ink cannot be ensured. Moreover, the dispersion stability of the pigment tends to be decreased, and therefore, the upper limit of the value of (a+b+c) is set to 10.

Examples of the polyoxypropylene glyceryl ether represented by the general formula 1 include Uniol TG-330, Uniol SGP-65, and Uniol TG-700 (all of which are manufactured by NOF Corporation). The value of (a+b+c) is perceived to be about 4 in the case of Uniol TG-330, about 8 in the case of Uniol SGP-65, and about 10 in the case of Uniol TG-700.

If the inkjet ink includes a dispersion medium containing a polyoxypropylene glyceryl ether as described above, the ejection performance from the inkjet head is improved, and also a suppressive effect on the deformation of paper is increased. An inkjet head member is generally made of a resin subjected to an insulation treatment, and also an inside portion of an ink supply channel is generally made of a rubber or a resin. The above-mentioned polyoxypropylene glyceryl ether has a relatively favorable wetting property against such a material, and therefore, the ejection performance from the inkjet head can be increased.

Consideration was made by the present inventors for the suppression of deformation of paper as follows. When paper comes into contact with the aqueous ink, the paper is deformed generally due to a mechanism as described below. First, because of water in the aqueous ink, hydrogen atoms forming hydrogen bonds in cellulose fiber which is a main component of paper are dissociated due to swelling and the hydrogen bonds are cleaved. When water evaporates and the paper dries, the hydrogen atoms in the cellulose fiber are reassociated and form hydrogen bonds again. This reassociation occurs in different states or at different positions than before the hydrogen bonds are cleaved, and as a result, the paper is deformed.

The above-mentioned polyoxypropylene glyceryl ether has an activity to suppress such reassociation in different states or at different positions owing to the steric structure thereof. Moreover, the polyoxypropylene glyceryl ether contains a propylene oxide group, which has an activity to soften paper.

By using the dispersion medium in which a predetermined amount of the above-mentioned polyoxypropylene glyceryl ether is combined with water, the excellent properties thereof is maximally exhibited, and the performance of suppressing the deformation of paper and the ejection performance are markedly improved. This finding was discovered by the present inventors.

Meanwhile, the content of water is from 50 to 80% by mass of the total amount of the inkjet ink. If the content of water is less than 50% by mass of the total amount of the ink, a viscosity within a range suitable as an inkjet ink cannot be ensured, and therefore, the ejection performance from the inkjet head is lowered. Moreover, the dispersion stability of the pigment is lowered, and therefore, clogging of the inkjet head is liable to occur. On the other hand, if the content of water exceeds 80% by mass of the total amount of the ink, it is difficult to suppress the deformation of paper.

Since the aqueous inkjet ink according to this embodiment contains water and a given polyoxypropylene glyceryl ether in predetermined amounts, an increase in viscosity due to water evaporation is suppressed. For example, even if the content of water in the ink is decreased to 20% by mass, the viscosity of the ink at 25°C can be made 1000 mPa·s or less. This means that it is not necessary to frequently perform a maintenance operation for a nozzle of the inkjet head.

In addition, the aqueous inkjet ink according to this embodiment is difficult to penetrate into a paper medium. For example, when the ink is ejected onto a paper medium at an ejection amount of 1.5 mg/cm², the drying time of the aqueous inkjet ink according to this embodiment is 10 minutes or more. At this time, the depth of penetration of the dispersion medium into the paper medium is 70% or less of the thickness of the paper medium. This is one of the factors to suppress the deformation of the paper medium.

In the aqueous inkjet ink according to this embodiment, any of the following components may be contained within a range that does not deteriorate the properties: for example, polyhydric alcohols such as ethylene glycol, diethylene glycol, polypropylene glycol, 1,5-pentanediol, 1,6-hexanediol, 1,2-hexanediol, 1,2,6-hexanetriol, 1,2,4-butanetriol, 1,2,3-butanetriol, and 3-methyl-1,3,5-pentanetriol; nitrogen-containing heterocyclic compounds such as N-methyl-2-pyrrolidone, N-hydroxyethyl-2-pyrrolidone, 2-pyrrolidone, 1,3-dimethyl imidazolidinone, and ε-caprolactam; amines such as monoethanolamine, diethanolamine, triethanolamine, monoethylamine, diethylamine, and triethylamine; sulfur-containing compounds such as dimethylsulfoxide, sulfolane, and thiodiethanol; propylene carbonate, ethylene carbonate, γ-bytyrolactone, and the like.

When the aqueous inkjet ink according to this embodiment is obtained, for example, the dispersion medium containing water and a given polyoxypropylene glyceryl ether in predetermined amounts, respectively, and a pigment dispersion are mixed. To the dispersion medium, an additive can be added as needed.

Since the ink according to this embodiment is for inkjet printing, it is necessary that the ink have a viscosity suitable for ejection from a nozzle of a head in an inkjet printer. Specifically, the viscosity of the ink at 25°C is preferably from 5 to 50 mPa·s. If the viscosity of the ink is 30 mPa·s or less, the temperature of the inkjet head during the ejection operation can be set to a relatively low temperature (for example, about 40°C or lower).

In order to adjust the ejection performance, moisture-retaining property, storage stability, physical properties, and the like of the inkjet ink to be within an optimum range, a surfactant, a moisture-retaining agent, a water-soluble resin, or the like may be additionally added to the ink within a range that does not deteriorate the effect.

Examples of the surfactant include polyoxyethylene alkyl ethers, polyoxyalkylene alkyl ethers, polyoxyethylene polycyclic phenyl ethers, polyoxyalkylene polycyclic phenyl ethers, and glycerin fatty acid esters.

Further, an acetylene glycol-based surfactant, a fluorine-based surfactant, or a nonionic surfactant can also be used. Examples of the acetylene glycol-based surfactant include 2,4,7,9-tetramethyl-5-decyne-4,7-diol, 3,6-dimethyl-4-octyne-3,6-diol, and 3,5-dimethyl-1-hexyn-3-ol. Specific examples thereof include Surfynol 104, Surfynol 82, Surfynol 465, Surfynol 485, and Surfynol TG (all of which are manufactured by Air Products, Inc.).

Examples of the fluorine-based surfactant include perfluoroalkyl ethylene oxide adducts, perfluoroalkyl amine oxides, perfluoroalkyl carboxylates, and perfluoroalkyl sulfonates. Specific examples thereof include Megafac F-443, Megafac F-444, Megafac F-470, and Megafac F-494 (all of which are manufactured by Dainippon Ink Chemical Industry, Co., Ltd.), Novec FC-430 and Novec FC-4430 (all of which are manufactured by 3M Co., Ltd.), and Surflon S-141, Surflon S-145, Surflon S-111N, and Surflon S-113 (all of which are manufactured by Seimi Chemical Co., Ltd.).

Examples of the nonionic surfactant include polyoxyethylene alkyl esters, polyoxyethylene sorbitan fatty acid esters, polyoxyethylene alkylphenyl ethers, polyoxyethylene alkylamines, and polyoxyethylene alkylamides.

It is desired that such a surfactant is added to the ink in such an amount that does not deteriorate the dispersion stability and the like of the ink. The surfactant can exhibit an effect without causing any disadvantage as long as the surfactant is contained in an amount of about 0.5 to 2.0% by mass of the total amount of the ink.

Among the above-mentioned surfactants, for example, an acetylene glycol-based surfactant, a nonionic surfactant, or the like can be used as a dispersant for preparing a pigment dispersion.

The surfactant may be used in combination with a salt. Examples of the salt include polyoxyethylene alkyl ether acetates, dodecylbenzene sulfonates, laurates, and salts of polyoxyethylene alkyl ether sulfates. The salt can exhibit an effect without causing any disadvantage as long as the salt is contained in an amount of about 0.5 to 1.0% by mass of the total amount of the ink.

As the moisture-retaining agent, for example, glycerin, polyethylene glycol, or the like can be used. More specifically, PEG 200 (manufactured by Sanyo Chemical Industries, Ltd.) can be used. When the moisture-retaining agent is contained in an amount of 10 to 19% by mass of the total amount of the ink, the clogging resistance can be improved without causing any disadvantage.

The water-soluble resin has an activity to adjust the viscosity of the ink. A printed matter formed using the ink containing a water-soluble resin has an improved print quality such as abrasion property. Examples of the water-soluble resin include polyvinyl alcohol, hydroxypropyl cellulose, carboxymethyl cellulose, hydroxyethyl cellulose, methyl cellulose, a water-soluble acrylic resin, polyvinylpyrrolidone, gum Arabic, dextrin, casein, and peptin. In particular, the ink containing a water-soluble acrylic resin is preferred because the fixability to a paper medium is improved without deteriorating the dispersibility of the pigment.

Among these water-soluble resins, for example, a water-soluble acrylic resin or the like can be used as a dispersant for preparing a pigment dispersion.

According to need, an additive such as a pH adjusting agent or an antiseptic or antifungal agent can be blended in the aqueous inkjet ink according to this embodiment. Examples of the pH adjusting agent include potassium dihydrogen phosphate, disodium hydrogen phosphate, and sodium hydroxide.

As the antiseptic or antifungal agent, for example, sodium benzoate, sodium pentachlorophenol, sodium 2-pyridinethiol-1-oxide, sodium sorbate, sodium dehydroacetate, 1,2-dibenzisothiazolin-3-one (Proxel CRL, Proxel BDN, Proxel GXL, Proxel XL-2, or Proxel TN, all of which are manufactured by Imperial Chemical Industries Limited), or the like can be used.

By blending such an additive, the print image quality or storage stability can be further increased.

Hereinafter, specific examples of the aqueous inkjet ink will be shown.

As the polyoxypropylene glyceryl ether represented by the general formula 1, Uniol TG-330 (manufactured by NOF Corporation) was prepared. In the case of this compound, the value of (a+b+c) in the general formula 1 is about 4.

The respective components were mixed with one another according to the formulation shown in the following Table 1, whereby each ink sample was prepared. In the table, the amount of each component is expressed in % by mass of the total amount of the inkjet ink. As the surfactant, Surfynol 465 was used.

As the pigment dispersion, a carbon black dispersion liquid CAB-JET-300 (manufactured by Cabot Corporation) was prepared. This pigment dispersion is a self-dispersible pigment dispersion in which carbon black is dispersed in water. The average particle diameter of the pigment is about 120 nm. The amount of water contained in the pigment dispersion is included in the amount of water in the following Table 1.

Further, to all of the samples, an antiseptic agent was added in an amount of 0.2% by mass of the total amount of the ink sample. As the antiseptic agent, Proxel XL-2 (S) was used.

In the preparation of each ink sample, the respective components were mixed according to the formulation shown in the table, and the resulting mixture was stirred for 1 hour using a stirrer. Thereafter, the mixture was filtered through a 1-µm membrane filter, whereby the sample was obtained.

**Table 1**

| No. | Dispersion medium | | Moisture-retaining agent | | Surfactant | Pigment |
|---|---|---|---|---|---|---|
| | Water | TG-330 | Glycerin | PEG 200 | | |
| 1 | 44 | 45 | 5 | | 1 | 5 |
| 2 | 50 | 44 | | | 1 | 5 |
| 3 | 50 | 30 | 14 | | 1 | 5 |
| 4 | 60 | 34 | | | 1 | 5 |
| 5 | 60 | 20 | 14 | | 1 | 5 |
| 6 | 70 | 14 | | 10 | 1 | 5 |
| 7 | 70 | 5 | | 19 | 1 | 5 |
| 8 | 80 | 14 | | | 1 | 5 |
| 9 | 80 | 10 | | 4 | 1 | 5 |
| 10 | 85 | 9 | | | 1 | 5 |
| 11 | 70 | 3 | 21 | | 1 | 5 |

In each ink sample, the proportions of water and TG-330 in the dispersion medium are summarized in the following Table 2.

**Table 2**

| No. | Water (mass%) | TG-330 (mass%) |
|---|---|---|
| 1 | 49.4 | 50.6 |
| 2 | 53.2 | 46.8 |
| 3 | 62.5 | 37.5 |
| 4 | 63.8 | 36.2 |
| 5 | 75.0 | 25.0 |
| 6 | 83.3 | 16.7 |
| 7 | 93.3 | 6.7 |
| 8 | 85.1 | 14.9 |
| 9 | 88.9 | 11.1 |
| 10 | 90.4 | 9.6 |
| 11 | 95.9 | 4.1 |

Printing was performed on plain paper using each of the thus obtained ink samples, and the performance of the ink was evaluated based on the degree of deformation of paper and the quality of an image. As the plain paper, Toshiba Copy Paper was used, and as the printing apparatus, an inkjet printing apparatus provided with a Toshiba TEC's piezo head CF1 was used.

### (Performance of conveying paper)

A solid image was formed on plain paper, and the presence or absence of deformation of paper immediately after printing was evaluated for the performance of conveying paper. In order to form one pixel, 3 droplets of 4 pl of the ink were continuously ejected from one nozzle and allowed to land on the same position. The solid image was formed at 600 dpi (dots per inch) on the entire surface of one side of the paper.

The performance of conveying paper was evaluated based on the following criteria. When the paper can be conveyed, an ink sample is acceptable.
A: The paper can be conveyed without causing a paper jam, and the degree of curling is within ± 5 mm.
B: The paper can be conveyed without causing a paper jam, and the degree of curling is within ± 10 mm.
C: The paper cannot be conveyed due to a paper jam.

### (Performance of suppressing deformation of paper)

Solid printing was performed at a 100% duty in a 10 mm x 100 mm area of plain paper, whereby a print sample was obtained. By using a laser displacement meter, the degree of deformation of paper (the magnitude of paper warping: cockle size) was obtained and evaluated based on the following criteria according to the concave-convex amount (length). When the concave-convex length is less than 1.0 mm, an ink sample is acceptable with respect to the performance of suppressing the deformation of paper.
A: less than 0.5 mm
B: 0.5 mm or more but less than 1.0 mm
C: 1.0 mm or more but less than 2.0 mm
D: 2.0 mm or more

### (Print quality)

First, characters and a solid image were printed on plain paper. As for the characters, the occurrence of bleeding or feathering was determined by visual observation. As for the solid image, by using an X-Rite densitometer, the image density was examined on both front and back sides of the paper.

Further, according to the formula (circumferential length)² / (4π x area), the shape factor of each dot of the printed image was calculated. The shape factor is an evaluation value obtained by quantifying the degree of bleeding. The circumferential length and the area were determined by an image analysis using a dot analyzer. When the irregularity of the dot shape is small, the shape factor is close to 1. By comprehensively considering the image densities on both front and back sides of the paper and the shape factor, evaluation was performed according to the criteria shown in the following Table 3. An ink sample evaluated as "A" or "B" is acceptable with respect to the image quality.

**Table 3**

| Evaluation | Image density (front side) | Image density (back side) | Shape factor |
|---|---|---|---|
| A | 1.25 or more | 0.2 or less | 1.0 or more but less than 1.8 |
| B | 1.2 or more | 0.3 or less | 1.8 or more but less than 2.6 |
| C | 1.1 or less | 0.4 or less | 2.6 or more |

### (Clogging resistance)

Printing was performed by the above-mentioned inkjet printing apparatus using each ink sample. After printing, the nozzle hole was closed with a cap, and the nozzle was left as such in an environment of 25°C. After one week, a printing test was performed again using the inkjet printing apparatus. The clogging resistance was evaluated based on the stability of ejection. The number of cleaning operations required until the ejection performance was restored was examined, and evaluation was performed based on the following criteria. The cleaning operation as used herein refers to an operation of removing a thickened ink adhering around the nozzle of the head.
A: 0 times
B: 1 or 2 times
C: 3 to 5 times
D: 6 times or more

The clogging resistance is used as an index for the dispersion stability of the pigment in the dispersion medium. Even if the balance between the two components of the dispersion medium is lost by evaporating water which is a volatile component, good clogging resistance can be obtained as long as the pigment dispersibility is stable to some extent.

An ink sample evaluated as "B" or "A" with respect to all of the four evaluation items: performance of conveying paper, performance of suppressing the deformation of paper, print quality, and clogging resistance is acceptable. In other words, an ink sample evaluated as "C" or "D" with respect to at least one of the four evaluation items is not acceptable. The obtained results are summarized in the following Table 4.

**Table 4**

| No. | Conveying performance | Deformation suppressing performance | Print quality | Clogging resistance |
|---|---|---|---|---|
| 1 | B | A | C | D |
| 2 | A | A | B | B |
| 3 | A | A | B | A |
| 4 | A | A | B | B |
| 5 | A | A | B | A |
| 6 | A | A | A | B |
| 7 | B | B | A | A |
| 8 | B | B | A | B |
| 9 | B | B | A | B |
| 10 | C | D | A | C |
| 11 | C | D | A | A |

As shown in the above Table 4, the ink samples No. 2 to No. 9 are acceptable with respect to all of the evaluation items: conveying performance, clogging resistance, deformation suppressing performance, and print quality. As shown in the above Table 2, in these samples, the dispersion medium composed of water and a given polyoxypropylene glyceryl ether contains water in an amount of 53 to 94% by mass, with the remainder of the dispersion medium being TG-330.

Moreover, as shown in the above Table 1, in the ink samples No. 2 to No. 9, water accounts for 50 to 80% by mass of the total amount of the ink. As a result, it was possible to obtain the ink samples which have favorable properties with respect to all of the conveying performance, clogging resistance, and deformation suppressing performance, and with which a high quality image can be formed. Incidentally, the amount of the dispersion medium in each of these ink samples was from 80 to 94% by mass of the total amount of the ink.

Among these, the ink samples No. 2 to No. 6 are further more excellent with respect to the paper conveying performance and deformation suppressing performance. It was confirmed that in these samples, the content of water in the dispersion medium is from 53 to 84% by mass, which is an optimum water content for suppressing the deformation of paper.

The ink sample No. 1 is significantly inferior with respect to the clogging resistance. In this ink sample No. 1, the content of water is 44% by mass of the total amount of the ink and also the amount of water in the dispersion medium is 49.4% by mass. The amount of water relative not only to the total amount of the ink but also to the total amount of the dispersion medium is small, and therefore, the pigment cannot be stably dispersed in the ink sample No. 1. As a result, clogging occurred. In the case of the ink sample No. 1, the ejection performance is poor attributed to the low content of water, and therefore the print quality is also low.

The ink sample No. 10 is inferior with respect to the clogging resistance as well as the conveying performance and deformation suppressing performance. In this ink sample No. 10, the content of water is 85% by mass of the total amount of the ink, and the amount of water in the dispersion medium is 90.4% by mass. The amount of water relative not only to the total amount of the ink but also to the total amount of the dispersion medium is large, and therefore, the deformation of paper cannot be suppressed. Moreover, the amount of the polyoxypropylene glyceryl ether is small, and a thickened ink is increased, and therefore, also the clogging resistance is poor.

The ink sample No. 11 is inferior with respect to the conveying performance and deformation suppressing performance. In the ink sample No. 11, water accounts for 70% by mass of the total amount of the ink, however, the amount of water in the dispersion medium is 95.9% by mass. In the ink sample No. 11, the amount of water relative to the total amount of the dispersion medium is large, and therefore, the deformation of paper cannot be suppressed.

In order to obtain an aqueous inkjet ink, with which a high quality image can be formed while suppressing the deformation of paper, and which has favorable clogging resistance, the dispersion medium composed of water and a given polyoxypropylene glyceryl ether should contain water in an amount of 53 to 94% by mass of the total amount of the dispersion medium. Further, water should account for 50 to 80% by mass of the total amount of the ink. The ink samples No. 2 to No. 9 satisfy the requirements, and therefore, the desired properties were obtained.

Further, the ink samples No. 2 to No. 9 exhibited excellent deformation suppressing performance also for various types of plain paper other than Toshiba Copy Paper. In general, the deformation of paper depends on the type of paper. When the deformation suppressing performance is examined as described above using a type of paper which is liable to be deformed, the evaluation grade may be decreased by one grade in some cases. The ink samples No. 2 to No. 9 maintained an evaluation grade of approximately "A" with respect to the performance of suppressing the deformation of paper even when paper which is liable to be deformed was used. It was confirmed that these ink samples are particularly superior with respect to the performance of suppressing the deformation of paper.

The aqueous inkjet ink according to this embodiment can form a high quality image on a paper medium without causing the deformation of the paper medium.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An aqueous inkjet ink **characterized by** comprising:
a pigment in an amount of 2 to 20% by mass of a total amount of the aqueous inkjet ink; and
a dispersion medium in which the pigment is dispersed, the dispersion medium comprising water in an amount of 53 to 94% by mass, with a remainder of the dispersion medium being a compound represented by the following general formula 1, and the water accounting for 50 to 80% by mass of the total amount of the aqueous inkjet ink: 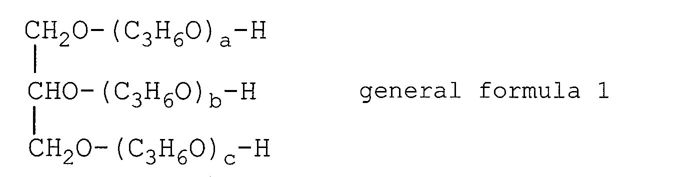 wherein a, b, and c may be the same or different, each representing an integer of 1 or more, and satisfy the following inequation: 4 ≤ a+b+c ≤ 10.

2. The ink according to claim 1, **characterized in that** the dispersion medium accounts for 80 to 94% by mass of the total amount of the aqueous inkjet ink.

3. The ink according to claim 1, **characterized in that** the water accounts for 53 to 84% by mass of the total amount of the dispersion medium.

4. The ink according to claim 1, **characterized in that** the compound represented by the general formula 1 accounts for 16 to 47% by mass of the total amount of the dispersion medium.

5. The ink according to claim 1, **characterized in that** a+b+c in the general formula 1 is 4.

6. The ink according to claim 1, **characterized by** further comprising a moisture-retaining agent.

7. The ink according to claim 6, **characterized in that** the moisture-retaining agent is selected from glycerin and polyethylene glycol.

8. The ink according to claim 6, **characterized in that** an amount of the moisture-retaining agent is from 10 to 19% by mass of the total amount of the aqueous inkjet ink.

9. The ink according to claim 1, **characterized by** further comprising a surfactant.

10. The ink according to claim 9, **characterized in that** an amount of the surfactant is from 0.5 to 2.0% by mass of the total amount of the aqueous inkjet ink.

11. The ink according to claim 1, **characterized in that** the pigment is a self-dispersible pigment.

12. A method for inkjet printing **characterized by** comprising:
ejecting at least one type of ink composition from an inkjet head onto a paper medium to form an image, the ink composition being the aqueous inkjet ink according to claim 1.

13. The method according to claim 12, **characterized in that** the image is formed using one type of ink composition.

14. The method according to claim 12, **characterized in that** the image is formed using two or more types of ink compositions of different colors.
